**Europäisches Patentamt**

**European Patent Office**

**Office européen des brevets**

(19)

(11) Publication number: **0 154 320**
**A2**

## (12) EUROPEAN PATENT APPLICATION

(21) Application number: **85102416.6**

(22) Date of filing: **04.03.85**

(51) Int. Cl.⁴: **B 07 C 3/14**
**G 06 K 7/14**

(30) Priority: **09.03.84 IT 6721984**

(43) Date of publication of application:
**11.09.85 Bulletin 85/37**

(84) Designated Contracting States:
**BE DE FR GB NL**

(71) Applicant: **ELETTRONICA SAN GIORGIO- ELSAG S.p.A.**
**Via G. Puccini, 2**
**I-16154 Genova-Sestri(IT)**

(72) Inventor: **Filauro, Paolo**
**Via Carrea, 9/16**
**I-16149 Genova(IT)**

(72) Inventor: **Della Valle, Giovanni**
**Via Corradini, 28/4**
**I-17100 Savona(IT)**

(74) Representative: **Prato, Roberto et al,**
**c/o Ingg. Carlo e Mario Torta Via Viotti 9**
**I-10121 Torino(IT)**

(54) Linear code reading set.

(57) Bar code reading set (1) comprising means for processing digital signals (2) comprising digital data representing the said bars and produced by means of progressive, sequential scanning by lines and columns of an element (9) supporting the said bars.

The said reading set (1) is characterised by the fact that the said means comprise first means (11) for reading the said digital data according to a preset matching arrangement and for converting the said digital data into at least one sequence of at least two values locating the arrangement of the said bars.

EP 0 154 320 A2

./...

Fig.1

# LINEAR CODE READING SET

The present invention relates to a set for reading linear codes, in particular, mailing address bar codes.

Sets of the aforementioned type comprise means for processing digital signals from a said bar pick-up and optical-electronic converting head, the said digital signals comprising digital data representing the said bars and produced by progressive, sequential scanning by lines and columns of an element supporting the said bars.

The aim of the present invention is to provide a relatively straightforward, reasonably-priced bar code reading set, generally reliable enough for reading the said codes correctly, even in the event of various types of spurious data being contained in the digital signals supplied for processing.

With this aim in view, the present invention relates to a bar code reading set comprising means for processing digital signals comprising digital data representing the said bars and produced by progressive, sequential scanning by lines and columns of an element supporting the said bars, characterised by the fact that the said means comprise first means for reading the said digital data according to a set matching arrangement and for converting the said digital data into at least one sequence of at least two values locating the arrangement of the said bars.

A non-limiting arrangement of the present invention will now be described with reference to the attached drawings in which :

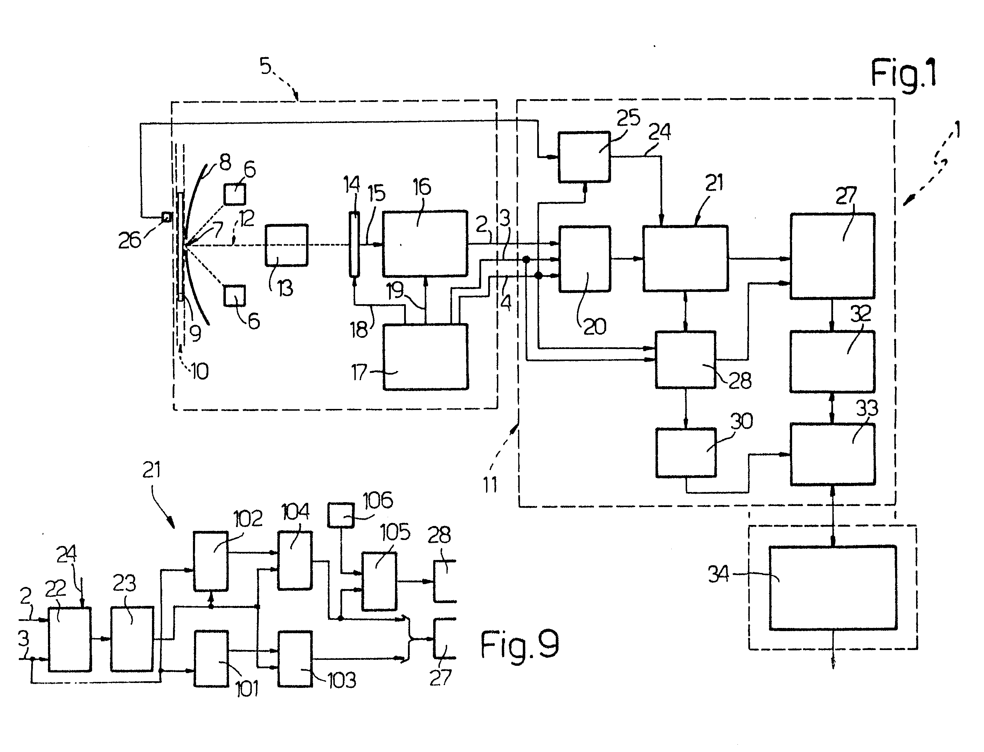

- Fig.1 shows a block diagram of the set according to the present invention;

- Fig.s 2, 3 and 4 show operating block diagrams of the Fig.1 set;

- Fig.s 5, 6 and 7 show examples of bar codes readable using the set according to the present invention;

- Fig.8 shows data handled by the set according to the pre sent invention;

- Fig.9 shows a number of components on a block on the Fig.1 set.

Number 1 in Fig.1 indicates the set according to the present invention, the said set being enclosed by a dotted line and receiving three signals, 2, 3 and 4, from an optical-electronic reading head 5 also enclosed by a dotted line. The said reading head 5 comprises, in known manner, two lamps 6 lighting a slit 7 on a screen 8 beyond which is fitted an element 9 supporting the bar codes to be picked up and sliding inside channel 10. On optical axis 12 of slit 7 are fitted a focusing unit 13 and a detecting unit 14, the latter having, for example, 161 photodiodes arranged in column formation and of which 128 are image detectors.

The said detecting unit 14 converts the received optical signals into electrical analogue signals 15 which are sent to a processing block 16 which converts them into digital signal 2 comprising digital data representing the said code bars. Reading head 5 also comprises a timing block 17 which supplies sync signals 18 and 19 to detecting unit 14 and processing block 16, as well as supplying signals 3 and 4, the former of which enables the digital data in signal 2, and the latter of which indicates scanning commencement of a new column for detecting unit 14. Signals 2, 3 and 4 are supplied, via interface 20, to pertinent data scanning block 21. As shown in Fig.9, the said block 21 comprises, among other things, a parallel register 22 for signals 2 received from interface 20 together with enabling signal 3 and the 8-bit outputs of which are connected to block 23 comprising an 8-bit PROM correlator. Signal 3 is also supplied to the sync inputs of a first counter 101 and second counter 102. The output of block 23 is connected to an enabling input on second counter 102 and to the sync inputs of a first memory register 103 and a second memory register 104 the signal inputs of which are connected respectively to the signal outputs on first counter 101 and second counter 102. The outputs of the said registers 103 and 104 go to buffer memory 27.

The output of memory register 104 also goes to a comparing block 105 which also receives a second reference signal from a value setting block 106 formed, for example, by means of bridges. The output of comparing block 105 goes to a microsequencer block 28 which receives signals 3 and 4 and checks operation of block 21. Register 22 also re-

- 4 -

0154320

ceives an enabling signal 24 from an interface block 25 generating a preset signal 2 acquisition start delay. The said block 25 is connected to a photocell 26 for detecting the presence of element 9, the said photocell 26 being set up at a preset distance, e.g. 90 mm, from optical axis 12 and also receiving signal 4 as a sync signal. The length of the delay generated by block 25 for signal 24 depends on the distance between photocell 26 and optical axis 12 and on the sliding speed of element 9. The said delay is produced by means of a down-counter preloaded with a given value, programmable by means of a series of bridges, and decreased by timing signal 4. 8-bit correlator 23 on block 21 has its content updated at each signal 3 cycle confirming a further digital datum from the relative photodiode on detecting unit 14, and provides for reading, over a string of eight bits, a preset configuration on the PROM corresponding to at least five logic 1 bits, and for generating a set of two data, described in more detail later on, which are transferred into buffer memory 27 via microsequencer block 28. By means of signal 3, the arrival in block 21 of each new digital datum in signal 2 steps up first counter 101 which indicates the location of the relative digital datum in the video column being scanned by detecting unit 14. When a valid configuration is read by correlator 23, the status of the said first counter 101 is memorised in position register 103 while, at the same time, the second counter 102 is allowed to advance, the function of the latter being to calculate for how many signal 3 cycles the valid sequence read by correlator 23 remains present. As the valid sequence, indicated by the output on PROM 23 remaining at logic level 1, expires, second counter 102 is stopped and its content, equal to the length of the sequence read by correlator 23, is transferred into length register 104 and supplied to memory 27. The said contant is also compared in comparator block 105 with the length set in block 106, and the valid/invalid-sequence signal supplied from block 105 to block 28. As already stated, operation of block 21 is checked entirely by block 28 which also receives the valid-sequence (acceptable or unacceptable sequence length) and end-of-column signals. The said block 28 also controls zeroing of the registers, loading of buffer memory 27 and a block 30 for memorising the positions, in the acquired image, of the first and last video column containing a sequence considered valid by correlator 23 on block 21. This is achieved by means of a counter updated by sync signal 4 during the valid signal 2 acquisition period. FIFO buffer memory 27 is connected to a main RAM memory 32 connected, via interface block 33, to the central processing unit (CPU) 34 on a computer for processing and converting the digital data relative to the bar codes on element 9, according to the algorithm described later on.

Interface 33 is also connected to memory block 30 and the said processing unit 34 may conveniently be connected to any user or control equipment as required.

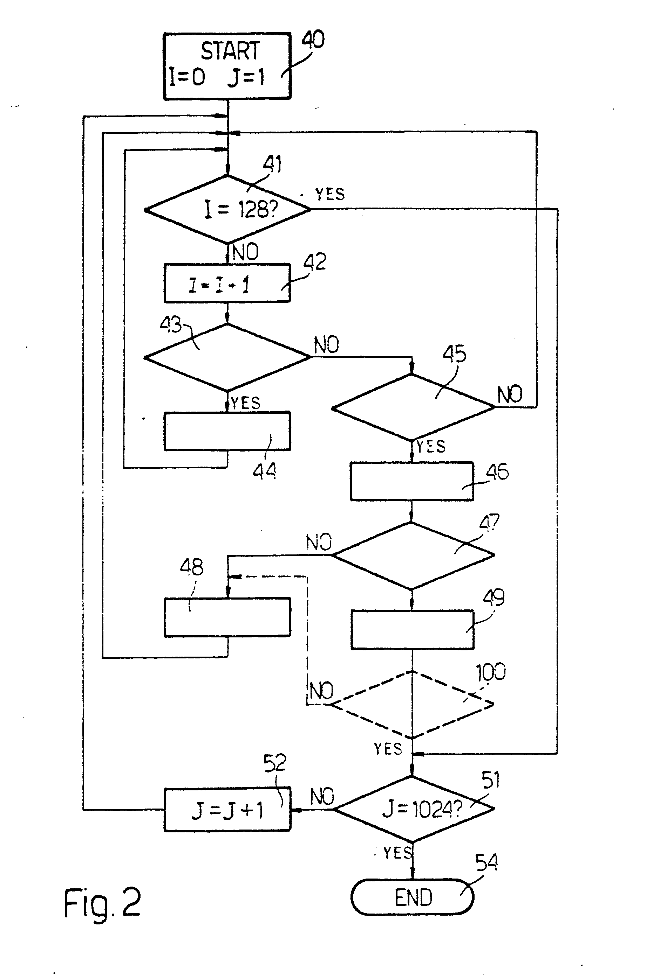

The operation of microsequencer block 28 and the connected blocks in part 11 enclosed by the dotted line will now be described in more detail with reference to Fig.2. It should be pointed out that digital signals 2 define an image produced by sequentially scanning a preset number of columns (e.g. 1024) having a number of pick-up points (e.g. lines) per column equal, for example, to 128. The said digital signals 2 are therefore 128 x 1024 at logic levels 0 or 1, depending on the processing performed by block 16 and the graphics on the element 9 being scanned by reading head 5.

As shown in Fig.2, block 40, enabled by signal 24, starts operation and supplies the initial conditions for scanning the digital data relative to the first line (I) and first column (J). Block 40 goes to block 41 which ascertains whether I = 128, i.e. whether the signal line is the last one. If it is not, the next block 42 increases by one unit the content of first counter 101 at sync signal 3 for digi_ tal signal 2, i.e. effecting a one-line position increase. Block 42 goes to block 43 which ascertains, via the said correlator 23, whether any match exists between the bits between line I and line I+7 in column J being examined and between the eight logic 1 bits, with a matching threshold of 5. If such matching exists, the next block 44 memorises the status of the said first counter 101 in register 103 and starts second counter 102 for as long as correlator 23 matches. Block 44 then goes back to block 41. The negative output of block 43, on the other hand, goes to block 45 which ascertains whether the said second counter 102 is operative. If it is not, block 45 goes back to block 41; if it is, block 45 goes to block 46 which stops counter 102. The next block 47 (corresponding to block 105 in Fig.9) ascertains whether the content of the said second counter 102 is below a given threshold, e.g. 30. If it is not, i.e. threshold exceeded, the next block 48 zeroes the status of first counter 101 memorised by block 44, zeroes second counter 102 and goes back to block 41. If it is, the next block 49 memorises the status of first counter 101, memorised by block 44, and the content of the said second counter 104 in buffer memory 27. Block 49 goes to block 51 which ascertains whether column J being examined is the last. If it is not, the next block 52 controls scanning of the next column at the relative next signal 4, zeroes the said first and second counters and loads buffer memory 27 with zeroes corresponding to missing data, should block 49 have been inoperative for the column in question. Block 52 goes to block 41 the positive output of which goes directly to block 51 the positive output of which goes to end-of-scan block 54.

Operation of set 1 according to the present invention will now be described in more detail with reference to a specific bar code reading as shown in Fig.s 5 and 6. Element 9, e.g. a letter, is stamped in reading area 60, enclosed by the dotted line, with a postal code having a number of parallel bars 61 of which each group 62 stands for a known type of coded figure. The said reading area 60 is, for example, 128 mm long (L) and 30 mm high (I) arranged parallel with the edges of supporting element 9, 5 mm from the bottom edge and 12 mm from the right-hand edge. Figure coding by each group 62 is conveniently of the three out of five type (i.e. three bars out of five positions) plus an initial bit START bar for each figure, with bar - no bar coding. The said bars 61 are conveniently of a height (h) ranging from 2.5 to 4 mm, a thickness (s) ranging from 0.3 to 0.8 mm and spacing (p) ranging from 1 to 3 mm, with maximum allowed dispersion of 20% of mean spacing within the code.

In-coming letter 9 is detected by photocell 26 and reading area 60 scanned, over 128 lines and 1,024 columns, by reading head 5 which supplies digital signals 2 to set 1 according to the present invention. Actual acquisition of signals 2 commences when the delay generated by block 25 expires. Signals 2, received in series formation from reading head 5 and approved by relative signal 3, are sent to parallel register 22 the 8-bit outputs of which are connected to the PROM on block 23. When, by means of the correlator on block 23, a sequence of eight digital signals 2 is found to contain five at logic level 1, equivalent to the presence of a section of bar 61, block 43 activates block 44 which memorises the status of first counter 101, equivalent to the progressive match starting line number, and enables advancement of second counter 102. At the end of the said matching phase with a threshold of over five, block 43 goes to block 46 which stops second counter 102, the said length being compared with the higher set threshold of 30 in block 47. If the detected bar 61 is shorter than the said maximum threshold, block 49 memorises two values in memory 27, one relative to the starting line on the said bar, and the other relative to the length of the said bar. Should bar 61, on the other hand, be longer than the said maximum threshold, block 47 goes to block 48 which zeroes the said values produced by the two counters and, by means of block 41, controls scanning in search of a new sequence. Blocks 41 and

42 scan all the lines in a given column, whereas blocks 51 and 52 scan all the columns. If no valid bar 61 sequences with a threshold over five are found in a given column, block 52 loads buffer memory 27 with corresponding zeroes to show the absence of bars 61 in that particular column. Thus, for all 1,024 columns, block 21 produces a sequence of two values locating the arrangement of code bars 61, one of the said values being relative to the line number from which one of the said bars 61 commences, and the oth er relative to the height of the said bar. An example of such a sequence is shown in the following Table 1 and memorised in memory 27.

### Table 1

| Columns | 1 | 2 | 3 | 4 | 5 | 6 | 7 | 8 | 9 | 10 | 11 | 12 | 13 | 14 | 15 | 16 | 17 | 18 | 19 | 20 | 21 | 22 | ... |
|---|---|---|---|---|---|---|---|---|---|---|---|---|---|---|---|---|---|---|---|---|---|---|---|
| | 0 | 0 | 0 | 0 | 60 | 62 | 64 | 66 | 0 | 0 | 0 | 60 | 62 | 65 | 0 | 0 | 0 | 2 | 60 | 61 | 65 | 0 | ... |
| | 0 | 0 | 0 | 0 | 14 | 18 | 15 | 13 | 0 | 0 | 0 | 10 | 11 | 10 | 0 | 0 | 0 | 10 | 12 | 13 | 14 | 0 | ... |

Buffer memory 27, the outputs of which are connected to main memory 32, is a data exchange memory interfacing two asynchronous processes : generation of the two-value sequence locating the arrangement of bars 61, connected to reading head 5, and memorisation of the said sequence in main mamory 32 which forms part of the space addressable by processing unit 34 and is controlled by the latter. Whenever available, the data sequence is loaded into memory 27 by microsequencer 28, whereas, reading of the said data by memory 27 is piloted by processing unit 34 according to specific access logic.

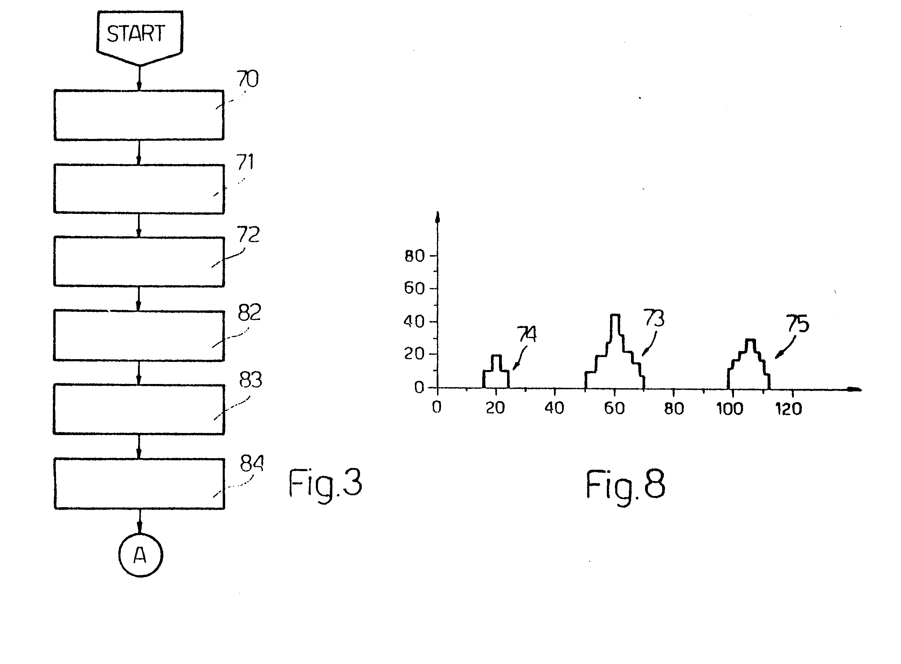

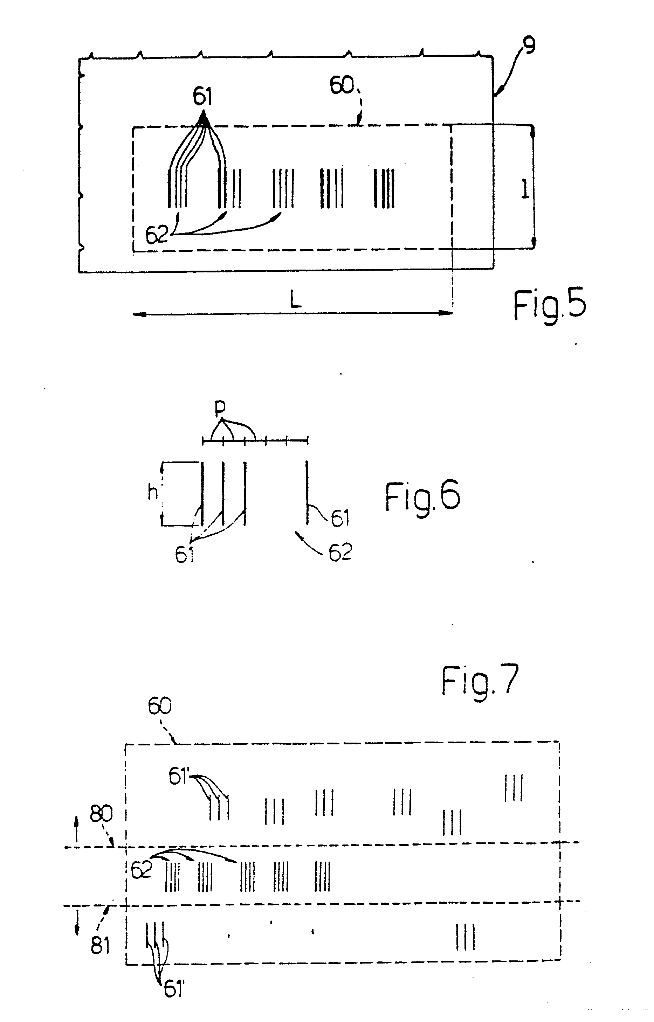

With reference to Fig.s 3 and 4, a description will now be given of the operation of main processing block 34 which operates on the data contained in main memory 32. Operating on the data in Table 1, block 70 produces a histogram (Fig.8) of the starting line numbers of detected bars 61. The Y axis in the said Fig.8 shows the progressive line number, up to 128, whereas the X axis shows the total number of columns having a bar 61 commencing on the respective Y axis line. Block 70 goes to block 71 (Fig.3) which picks out of a group of columns in Fig.8 a subgroup of columns (e.g. at least 50) in which, for a given column chosen at random, there exists at least one more in the subgroups for which the difference between the corresponding signal start lines is within a given threshold, e.g. three. In the Fig.8 histogram, such a group of columns falls between start lines 50 and 70. Block 71 goes to block 72 (Fig.3) which deletes, on Table 1 in memory 32, the columns having bars outside the line range defined by block 71. With reference to Fig.8, therefore, only the data relative to signal start line area 73 (between 50 and 70) is kept in the memory, whereas the data relative to signal start line areas 74 and 75 is deleted. For example, on Table 1, the column 18 data (2 and 10) is deleted and replaced by 0 and 0, whereas the other data is left unchanged. For read area 60 (Fig.7) this amounts to deleting the digital data relative to graphics 61' above and below lines 80 and 81 respectively, and to keeping in memory 32 only the data relative to the graphics between the said lines. Block 72 (Fig.3) goes to block 82 which, operating on the data in Table 1, modified by block 72, and scanning the whole sequence corresponding to all 1,024 columns, looks for blocks consisting of at least two adjacent columns containing logic level 1 digital data (black and corresponding to various portions of bars 61), after which, it memorises in Table 2 the progressive initial column number of the various blocks, the number of columns in the block (defining thickness Sk) and the total number of blocks detected, equal to NB. An example of Table 2 based on the foregoing Table 1 is the following :

| Initial N° | 5 | 12 | 19 | ... |
|---|---|---|---|---|
| Sk | 4 | 3 | 3 | ... |

Block 82 goes to block 83 which tabulates in Table 3 the distance between adjacent blocks, which is defined as Y axis difference Dk, with k ranging from 1 to NB-1. Table 3 resulting from processing the aforementioned Table 2 is the following :

| $D_1$ | $D_2$ | ... |
|---|---|---|
| 7 | 7 | ... |

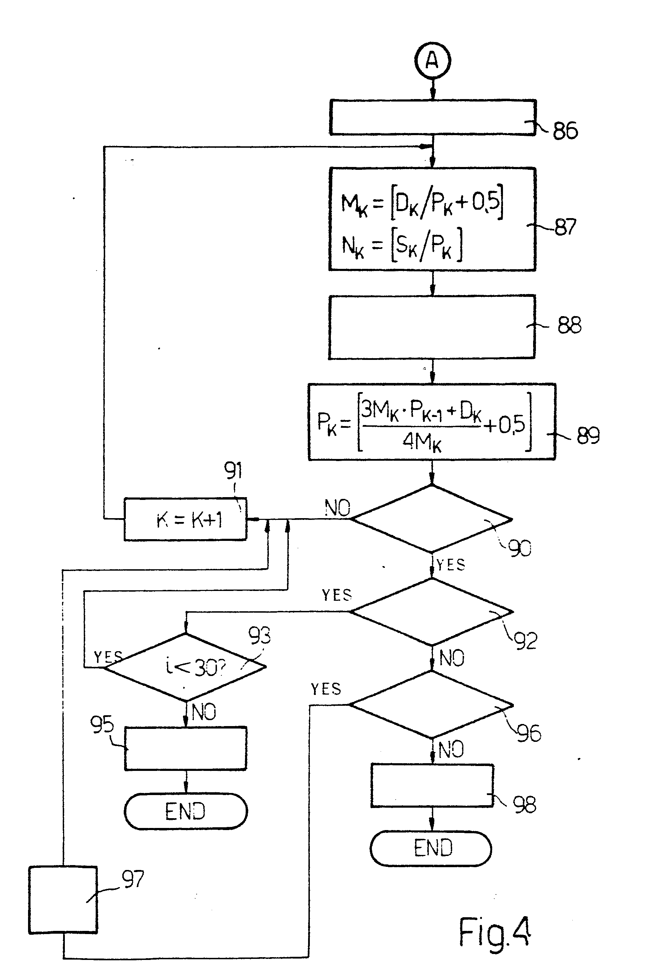

Block 83 goes to block 84 which determines the initial spacing between the blocks as the distance occurring most frequently on the said Table 3 within a given range. Block 84 goes to a group of blocks 86, 87, 88, 89 and 90 (Fig.4) the function of which is to determine a sequence of digital data at logic level 1 or 0 representing the detected bar code. The said blocks also detect the presence or absence of bars with the said spacing and the presence of adjacent bars. In more detail, block 86 performs and initiating function with a first initial sequence bit at logic level 1 and all the others at logic level 0. The next block 87 then calculates Mk as a whole part of the real number defined by the following equation : $Dk/Pk + 0.5$, and Nk produced by dividing $Sk/Pk$. The function of the first equation is to detect the presence or absence of bars, to the nearest real whole num

ber, by adding 0.5, produced by dividing block distance (Dk) by block spacing (pk). The function of the second equation is to detect the presence of adjacent bars not separated by blank columns (e.g. as a result of ink smears), by dividing the block thickness (SK) by the spacing (pk). Block 87 then goes to block 88 which forms the digital data sequence representing the bar code out of Mk code bits, of which Nk are at logic level 1 (to account for adjacent bars), (Mk - Nk - 1) are at logic level 0 (to account for missing bars) and the last bit is at logic level 1. In the case of code bar group 62 in Fig.6, the representative digital data sequence is 111001. Block 88 goes to block 89 which provides for adapting to a change in spacing between successive blocks according to the equation : $pk = (3M_k \times pk-1 + Dk) : 4M_k + 0.5$ . For example, if Pk-1 = 10, Dk = 13 and Mk = 1, Pk will equal 11, i.e. the spacing between the blocks increases alongside an increase in the detected distance between them. Block 89 goes to block 90 which ascertains whether all the digital data has been obtained relative to the various groups 62 each of which is defined by 6 bits, making the said digital data a multiple of six. If it has not, the next block 91 goes back to block 87 for calculating the parameters relative to the next block k. If it has, the next block 92 checks whether the digital data representing the bar code is correct or not. If it is, the next block 93 ascertains whether the total number of digital data representing the various figures in the bar code has been reached (in the present case in which the bar code is defined by five groups 62, the said total number of digital data will be thirty). If the number of digital data obtained (i) is below 30, the next block 91 goes back to block 87 for detecting the next digital data. If, on the other hand, all the digital data relative to the various groups 62 has been obtained, the next block 95 controls acceptance and conversion of the said digital data code firstly, for example, into BCD code and then into decimal numerical code, which may then be conveniently processed by processing unit 34 (Fig.1) for controlling handling of element 9 according to the established sorting mode or for controlling any other handling mode as required. Should the status of block 92 (Fig.4) be negative, i.e. the bar code digital data from the foregoing blocks is incorrect, the next block 96 ascertains whether k on the blocks is less than or equal to two. If it is, the next block 97 zeroes the first bit in the code, in that the latter may be preceded by spurious signals, after which, block 97 goes to block 91. If it is not, block 96 goes to block 98 which rejects and indicates rejection of the code.

The advantages of the set according to the present invention will be clear from the foregoing description. In particular, the said set, though being fairly straightforward, provides for a certain amount of sophistication in detecting, from digital signals supplied by a reading head, respective bar codes decoded by detecting the position of the said bars; in filtering spurious signals such as specks, lines, writing underneath or over the code and misalignment within a certain range; in automatically determining the spacing between various blocks of columns comprising bars, and in accounting for changes in the spacing between successive blocks caused, for example, by the said bars being stamped at different times. An outstanding feature of the said set 1 is the manner in which, via block 21, it converts the sequence of digital signals 2 representing the area analysed optically over a number of lines and columns into a sequence of at least two values, as defined in Table 1, locating the arrangement of the said bars and on which processing unit 34 may conveniently operate. Yet another outstanding feature is the partial formation of the operating blocks in Fig.2 using component blocks (Fig.9).

To those skilled in the art it will be clear that changes can be made to the arrangement of the present invention described herein without, however, departing from the scope of the same.

For example, with reference to Fig.2, a block 100 may be fitted between blocks 49 and 51 for ascertaining whether the data loaded into buffer memory 27 by block 49 is the second for column J being examined. If it is not, block 100 goes to block 48; if it is, block 100 goes to block 51, so that a double sequence of the said two values may be memorised in Table 1 for even more sophisticated reading of the said bar codes.

Furthermore, different coding standards other than bars 61 may be employed by changing a few of the figures referred to solely by way of examples in the present description.

0154320

## CLAIMS

1) - Bar code (61) reading set (1) comprising means for processing digital signals (2) comprising digital data representing the said bars (61) and produced by progressive, sequential scanning by lines and columns of an element (9) supporting the said bars (61), characterised by the fact that the said means comprise first means (11) for reading the said digital data according to a set matching arrangement and for converting the said digital data into at least one sequence of at least two values locating the arrangement of the said bars (61).

2) - Set according to Claim 1, characterised by the fact that one of the said two values is relative to the line number from which one of the said bars (61) commences, while the other is relative to the height of the said bar (61).

3) - Set according to Claim 1 or 2, characterised by the fact that the said sequence presents a number of component values for each pair equal to the said number of columns.

4) - Set according to one of the foregoing Claims, characterised by the fact that the said first means (11) comprise a correlating block (23) for detecting the said preset match.

5) - Set according to Claim 4, characterised by the fact that the said correlating block (23) comprises a PROM.

6) - Set according to one of the foregoing Claims, characterised by the fact that the said match is defined by a threshold.

7) - Set according to Claim 6, characterised by the fact that the said threshold is equal to five over a total of eight detected digital data.

8) - Set according to one of the foregoing Claims, characterised by the fact that the said first means comprise means (47) for detecting a maximum height threshold relative to the said bar (61).

9) - Set according to one of the foregoing Claims, characterised by the fact that the said first means (11) comprise a first counter (101) for detecting the starting line of the said bar (61), and a second counter (102) for detecting the height of the said bar (61).

10) - Set according to one of the foregoing Claims, characterised by the fact that the said first means (11) comprise a photocell (26) designed to detect the arrival of the said element (9) supporting the said bars (61) in the detecting area (7) of a reading head (5), and designed to supply the said digital signals (2).

11) - Set according to one of the foregoing Claims, characterised by the fact that the said first means comprise a block (30) for detecting a first and last column containing the said bars.

12) - Set according to one of the foregoing Claims, characterised by the fact that the said first means (11) comprise a microsequencer block (28) for the various operating stages, a block (21) for reading the said digital data (2), a buffer memory (27) for receiving the said sequence of at least two values, and a main memory (32) connected to the said buffer memory (27).

13) - Set according to one of the foregoing Claims, characterised by the fact that it comprises second means (70, 71,

- 17 -

0154320

72) operating on the said sequence of at least two values locating the arrangement of the said bars (61) and designed to determine the bars starting from lines within a set range, the remaining bars being deleted.

14) - Set according to Claim 13, characterised by the fact that it comprises third means (82) operating on the sequence of values from the said second means (70, 71, 72) and designed to determine blocks of adjacent bars (61) and their thickness, and to memorise the initial column number of each of the said blocks, their thickness and the total number of blocks.

15) - Set according to Claim 14, characterised by the fact that it comprises fourth means (83, 84) operating on the values from the said third means (82) and designed to determine the distance between the said blocks by selecting the most frequent value (spacing) within a preset range.

16) - Set according to Claim 15, characterised by the fact that it comprises fifth means (86, 87, 88, 89) operating on the values from the said third (82) and fourth (83, 84) means and designed to determine a sequence of digital data representing the said bar code, the said fifth means detecting the presence or absence of the said bars and adjacent bars.

17) - Set according to Claim 16, characterised by the fact that the said fifth means provide for adapting to a change in the spacing between the successive said blocks.

18) - Set according to Claim 16 or 17, characterised by the fact that it comprises sixth means (92) for checking whether or not the said digital data representing the said bar code is correct or not.

0154320

19) - Set according to one of the foregoing Claims from 16 to 18, characterised by the fact that it comprises seventh means (95) for converting the said digital data representing the said bar code.

20) - Set according to one of the foregoing Claims from 16 to 18, characterised by the fact that the said second, third, fourth, fifth and sixth means are controlled by a computer CPU (34).

21) - Set according to one of the foregoing Claims, characterised by the fact that the said bar codes (61) represent postal codes.

Fig.1

Fig.9

0154320

- 1 -

Fig. 2

START

70

71

72

82

83

84

A

Fig.3

80
60
40
20
0

0    20    40    60    80    100   120

74

73

75

Fig.8

0154320

$$M_K = \left[ D_K / P_K + 0{,}5 \right]$$
$$N_K = \left[ S_K / P_K \right]$$

$$P_K = \left[ \frac{3 M_K \cdot P_{K-1} + D_K}{4 M_K} + 0{,}5 \right]$$

K = K+1

NO

YES

YES

i < 30?

YES

NO

NO

END

YES

NO

END

Fig.4

0154320

Fig.5

Fig.6

Fig.7